# EUROPEAN PATENT APPLICATION

(11) **EP 0 789 429 A2**
(43) Date of publication of application: **13.08.1997**
(21) Application number: 97830042.4
(22) Date of filing: 07.02.1997
(51) Int. Cl.: H01R 31/02

(54) **Process for linking a hub to a computer in a local area network and kit for carrying out said process**

(30) Priority: 07.02.1996 IT MI960220
(71) Applicant: Proxel S.r.l., Calenzano (Firenze) (IT)
(72) Inventor: Simoncini,Antonino, Firenze (IT); Nicoletti,Pietro, Collegno(Torino) (IT)
(74) Representative: Pizzoli, Pasquale Vincenzo

(57) **Abstract**

A process for linking a hub (12) to at least a computer (3), said hub (12) and said computer (3) having at least one female standard connector (6, 11) each, comprising the following steps:
- fixing, preferably near the computer (3), a wall outlet (1) having on its front side at least one female standard connector (4),
- linking the female connector (6) of the computer (3) to the female connector (4) of the wall outlet (1) with a cable (7) having a male standard connector (8, 9) at both ends,
- linking the wall outlet (1) to the hub (12) with at least one cable (10), wherein the wall outlet (1) has on its rear side at least one further female standard connector (5) electrically connected with the female connector (4) on the front side of the wall outlet (1), whereby said further female connector (5) is linked with the female connector (11) of the hub (12) through at least one cable (10) having a male standard connector (13, 14) at both ends. The present invention also relates to a kit for carrying out said process.

## Description

The present invention relates to a process for linking computers in a local area network, and more particularly to an innovative process that allows to connect in a simple and easily changeable way a hub to one or more computers by means of a kit comprising cables and other electric devices.

It is known that a widespread data network kind is the so-called "star network", wherein the computers placed in the rooms of the local area network are linked through branch-free connections to a network concentrator called hub. Since this kind of network needs a large number of cables having different lengths, it is required an *ad hoc* installation usually comprising a junction panel, fastened to a wall or housed in a cabinet preferably near the hub, to which an end of a data cable is permanently fixed, e.g. by welding. The other end is fastened, also permanently, to the rear side of a wall outlet fixed preferably near each computer. The front side of the wall outlet is generally provided with a female connector of the same kind, for example a RJ45 standard connector, of those provided in the computer and in the hub. In order to complete this process, the computer is linked to the wall outlet by means of a cable having a standard male connector at both ends and the hub is linked to the junction panel by means of a suitable patch cable having at one end a standard male connector and at the other end a special movable connector suitable for the link to the junction panel.

This knows process has the following disadvantages:
- the link between the junction panel and the wall outlets is permanent, so that it cannot be changed without restructuring the network;
- the cables must be fastened behind the panel and the wall outlets with a particular attention and a specific skill, so that this operation can be carried out only by technicians equipped with suitable instruments and tools;
- the means for installing the network, such as the cables and the connectors, are different from each other and are not interchangeable, so that it is necessary to plan in advance, i.e. before installing the network, the exact quantity and the kind of said means.

It is therefore an object of the present invention to provide a process for linking the hub to the computers that is free from such disadvantages. Such an object is achieved by means of a process whose main features are disclosed in claim 1.

Thanks to the easiness of such a process and of the means for carrying it out, an unskilled person can establish the link in the local area network between the hub and the computers without necessarily resorting to a skilled technician. This process has the further advantage that the link is entirely carried out by means of removable standard cables and connectors, so that the network can be easily changed, removed and, if desired, reused elsewhere.

Furthermore, the process according to the present invention does not require the use of the junction panel, as the junction can be carried out by directly modifying the link scheme of the hub, e.g. by removing and inserting at different positions the cables linked thereto.

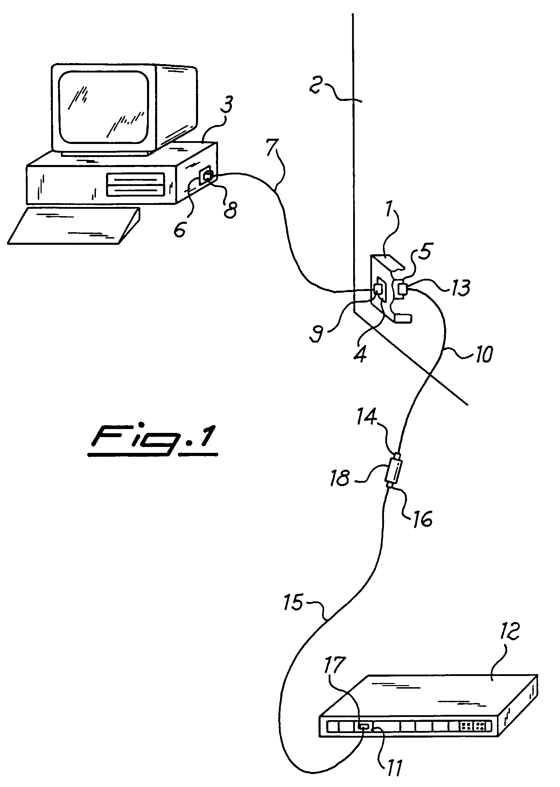

These and other advantages and features of the process according to the present invention will be apparent to those skilled in the art from the following detailed description of an embodiment thereof with reference to the annexed drawing wherein the sole figure shows a scheme of a link carried out by means of the process and the kit according to the present invention.

Referring to said figure, it can be seen that outlet 1 (shown in a partial section) is fixed to a wall 2 preferably near the computer 3 to be linked to the network. This outlet consists of an open box, preferably made of plastic, comprising a standard female connector 4, e.g. a RJ45 female connector, that is arranged on the front side of said outlet, and a standard female connector 5, e.g. another RJ45 female connector, that is arranged on the rear side of said outlet. The conductors of connectors 4 and 5 are electrically connected each other.

Once wall outlet 1 is fixed, front connector 4 is linked to the network socket of the computer, which generally comprises a standard female connector 6 of the same kind of connector 4. The cable 7 which carries out this link is preferably a copper twisted pair cable having two male standard connectors 8, 9 at its ends. Said male connectors 8, 9 are the same and can be inserted without distinction one into female connector 4 of wall outlet 1 and the other into female connector 6 of computer 3, or vice versa.

The process according to the present invention is completed by linking through a cable 10 the rear connector 5 of wall outlet 1 to one of the female standard connectors 11 of hub 12. Like cable 7, cable 10 is preferably a copper twisted pair cable having two male standard connectors 13, 14 at its ends.

If the distance from wall outlet 1 to hub 12 is longer than cable 10, the latter can be extended by means of at least one further cable 15 that has two male standard connectors 16, 17 at its ends and is connected to cable 10 by means of an adapter 18. Said adapter comprises two female standard connectors electrically connected each other and is preferably manufactured in a single body.

Cable 10 can be also extended by means of at least one further cable (not shown in the figure) having a male standard connector at one end and a female standard connector at the other end. In this case adapter 18 is useless, but it is necessary to provide cables having a different connectors, thereby disadvantageously decreasing the standardization of the cables.

The link between the hub and other computers is carried out by simply repeating the above process for each further computer, thereby obviously using a new set of cables. At last, it is advisable to improve the network plant by housing one or more cables into suitable ducts (not shown in the figure), which will be arranged along or inside the walls of the rooms served by the data network.

The process according to the present invention is easy to carry out because of the use of cables having the same standard connectors. It is therefore possible to manufacture and sell a kit comprising only a plurality of wall outlets, adapters and cables having the same standard. Such a kit allows an unskilled person to make a local area network which is easy to build and modify thanks to its fully standardized structure.

It is obviously not necessary to follow the chronological order of the operative steps of the process according to the present invention, as the same result can also be achieved by carrying out said operative steps following a different order. It is furthermore obvious that the term computer relates not only to computers in itself, but also to intelligent peripherals which can be linked in a local area network, e.g. printers provided with a print server.

It is clear that the above-described and illustrated embodiment of the process according to the invention is just an example susceptible of various modifications and/or additions. For instance, it is possible to use wall outlets having more than one pair of female connectors electrically connected each other, so as to connect more computers to a single wall outlet.

## Claims

1. A process for linking a hub (12) to at least a computer (3), said hub (12) and said computer (3) having at least one female standard connector (6, 11) each, comprising the following steps:
- fixing, preferably near the computer (3), a wall outlet (1) having on its front side at least one female standard connector (4),
- linking the female connector (6) of the computer (3) to the female connector (4) of the wall outlet (1) with a cable (7) having a male standard connector (8, 9) at both ends,
- linking the wall outlet (1) to the hub (12) with at least one cable (10), characterized in that the wall outlet (1) has on its rear side at least one further female standard connector (5) electrically connected with the female connector (4) on the front side of the wall outlet (1), whereby said further female connector (5) is linked with the female connector (11) of the hub (12) through at least one cable (10) having a male standard connector (13, 14) at both ends.

2. A process according to claim 1, characterized in that the cable (10) linking the hub (12) to the wall outlet (1) is extended by means of at least one cable (15) connected to the extended cable (10) through an adapter (18) comprising two female standard connectors, whereby said extending cable (15) has a male standard connector (16, 17) at both ends.

3. A process according to claim 1 or 2, characterized in that the cable (10) linking the hub (12) to the wall outlet (1) is extended by means of at least one cable having a male standard connector at one end and a female standard connector at the other end.

4. A process according to one of the above claims, characterized in that said cables (7, 10 and 15) are of the copper twisted pair kind.

5. A process according to one of the above claims, characterized in that the standard type of the male (8,9,13, 14, 16 and 17) and female (4, 5, 6 and 11) connectors is the same.

6. A process according to one of the above claims, characterized in that the standard type of the male (8,9,13, 14, 16 and 17) and female (4, 5, 6 and 11) connectors is the RJ45 standard.

7. A kit for carrying out the process according to one of the above claims, characterized in that it comprises a plurality of cables (7, 10) having a male standard connector (8, 9, 13, 14) at both ends, and at least a wall outlet (1) having at least two female standard connectors (4, 5), one on its front side and the other on its rear side, whereby said female connectors (4, 5) are electrically connected each other.

8. A kit according to claim 7, characterized in that it further comprises at least an adapter (18) having two female standard connectors electrically connected each other.

9. A kit according to claim 7 or 8, characterized in that it further comprises at least a cable having a male standard connector at one end and a female standard connector at the other end.
